# EUROPEAN PATENT APPLICATION

(11) **EP 1 694 057 A2**
(43) Date of publication of application: **23.08.2006**
(21) Application number: 06250903.9
(22) Date of filing: 21.02.2006
(51) Int. Cl.: H04N 5/225

(54) **Low light level colour camera**

(30) Priority: 21.02.2005 GB 0503545
(71) Applicant: E2V Technologies (UK) Limited, Chelmsford, Essex CM1 2QU (GB)
(72) Inventor: Spencer, Simon Howard, c/o E2V Technologies, Chelmsford Essex CM1 2QU (GB)
(74) Representative: Reeve, Nicholas Edward

(57) **Abstract**

A Video Camera for producing video images at low light levels, such as Quarter Moonlight (10mLux) is disclosed. The camera comprises a CCD sensor 10 selected because of its larger pixel size in comparison with other sensor designs. An angled mosaic filter 18, comprising yellow and cyan stripes is disposed directly on the image plane of the sensor, though spaced slightly from it, allowing a colour signal to be produced. The spacing defocuses the image of the mosaic and reduces intermodulation errors which were found to otherwise occur. Additional circuitry is provided in the camera to filter out the intermodulation errors, as well as remove any cross chroma errors resulting from the pattern of the mosaic filter. Black level matching circuitry is also provided to equalize the black level in each of the red, green and blue colour paths. A specific geometry for the colour pattern and pixels is disclosed for digital (pixel by pixel) decoding.

## Description

### TECHNICAL BACKGROUND

This invention relates to a low light level colour video camera, and in particular to a CCD low light level colour video camera.

It is known that adequate illumination is a crucial factor when capturing a photographic or video image of a subject. In most daytime situations, illumination is not a significant problem, or can be remedied with artificial lighting such as a flashbulb or a lighting rig. However, for low light level applications other measures must be taken in order to produce a viewable image. In night-time photography for example, increased exposure times can be used to capture enough light for the generation of a reasonable image. However, increased exposure times mean that any movement in the field of vision of the camera is also captured, leading to blurred images, or images in which the subjects leave tracks reflecting the change in their position over time.

Increased exposure times are not practical however for video cameras, as a minimum number of images, each with sufficient exposure, must be taken each second in order to produce a moving picture. Video cameras that are intended to be used at low light levels may for example be provided with an image intensifier fitted over the image capture part of the device. The amplification of light by image intensifiers is achieved by converting incident photons to electrons at the photo-cathode, and accelerating these by means of an electric field towards an anode and phosphor screen. The interaction of the electrons with the phosphor screen causes the phosphor to emit flashes of light at a greater intensity than originally received by the intensifier. The photons from these flashes of light then pass to the capture device where they can be recorded as an image.

However, while image intensifiers allow image capture in situations which to the human eye might appear pitch black, they also result in a number of disadvantages. As the light that is finally recorded as an image is received from the phosphor screen, not directly from the source, the colour information of the light is lost. The resulting image therefore contains only luminosity information of the scene. Furthermore, if the light received by the image intensifier is too intense then the phosphor screen may saturate, an effect which is called 'blooming'. Blooming can be seen when a strong light source is viewed using an image intensifier. In this case, the image of the source may bleed into other areas of the image and ruin it.

Other disadvantages are of a more practical nature. As image intensifiers are suited for low light level applications only, in order to convert a camera from low light level applications to ordinary light applications and vice versa, removal or installation of the intensifier is necessary. This is not always possible, depending on the design of the camera. Image intensifiers are also expensive and bulky making them cumbersome to carry and difficult to replace, and, because perfect correspondence in the connection with the sensor is not possible, lead to a distorted image which must be corrected before display.

In the applicant's earlier application, GB 2,318,012, a low light level camera employing an image intensifier attached to a CCD sensor is described. A filter is attached to the focal plane of the intensifier to produce colour information that can be decoded in the video circuitry to give an output colour video signal. The image intensifier is connected to the CCD image surface by number of optical fibres. The optical fibres result in a distorted image of the geometry of the filter being produced at the CCD. To overcome this, a reference signal is produced at the manufacturing stage using known images so that the distortion can be mapped. These signals are then stored in memory and used to compensate for the distortion so that high quality video pictures can be produced in use.

We have therefore appreciated that there is a need for an improved colour video camera that is capable of capturing images at low light levels.

### SUMMARY OF INVENTION

The invention is defined by the independent claims to which reference should now be made. Advantageous features are set forth in the dependent claims.

### BRIEF DESCRIPTION OF THE DRAWINGS

A preferred embodiment of the invention will now be described in more detail, by way of example, and by reference to the drawings in which:
Figure 1 is a schematic illustration of a low light level colour video camera in accordance with the preferred embodiment of the invention;
Figure 2 is a schematic illustration of a known angled colour mosaic filter;
Figure 3 is a schematic illustration of the luminance/chrominance separator shown in Figure 2;
Figure 4 is a schematic illustration of the colour path separator shown in Figure 2;
Figure 5a is a schematic illustration showing a tunable delay filter;
Figure 5b is a schematic illustration showing a tunable delay filter adjusted to remove magenta noise components;
Figure 6 illustrates the luminance extractor of the colour separator shown in Figure 1;
Figure 7 is an illustration of the processing circuitry according to the preferred embodiment, including circuitry for extracting the green signal from the luminance information;
Figure 8 is an illustration of a mosaic filter according to the preferred embodiment of the invention;
Figure 9 is a further illustration of the mosaic filter of Figure 8;
Figure 10 is an illustration of circuitry for equalizing the noise levels in the red, green and blue channels.

### DETAILED DESCRIPTION OF THE PREFERRED EMBODIMENT

A preferred embodiment of the invention will next be described. The preferred embodiment provides a colour camera that can output a useful video signal at extremely low light levels. In order to appreciate the illumination levels in question, we shall refer to the unit of Lux. One Lux is the equivalent of 1.46 mW of radiant electromagnetic power with a wavelength of 555nm, normal on a square metre of surface. 'Bright sunshine', for example, provides an illumination of about 100,000 Lux, 'Twilight' provides an illumination of about 10 Lux, and the daytime range of illumination is considered to be down to illuminations of about 1 Lux (corresponding to 'Deep Twilight'). Low light levels may conveniently therefore be thought of as 1 Lux or less.

In low light level applications, 0.1 Lux is approximately equivalent to the illumination from the Full Moon, 10mL to 'Quarter Moon' illumination, 1mL to 'Starlight' illumination, and 0.1mL to the illumination from 'Overcast Starlight'.

Present day colour video cameras can produce useful colour moving pictures down to illumination levels of Deep Twilight. After that, the signal to noise ratio of the image is too small for an image to be viewable, or an image intensifier is required resulting in the problems identified above. The preferred embodiment of the invention however allows useful colour video images to be captured at illumination levels as least as low as Quarter Moonlight.

A colour video Camera for producing video images at low light levels, such as quarter moonlight (10mLux) will now be described. A preferred embodiment of the camera comprises a CCD sensor selected because of its larger pixel size in comparison with other sensor designs. An angled mosaic filter, comprising yellow and cyan stripes is disposed directly on the image plane of the sensor, though spaced slightly from it, allowing a colour signal to be produced. The spacing defocuses the image of the mosaic and reduces intermodulation errors which were found to otherwise occur. Additional circuitry is provided in the camera to filter out the intermodulation errors, as well as remove any cross chroma errors resulting from the pattern of the mosaic filter. Black level matching circuitry is also provided to equalize the black level in each of the red, green and blue colour paths of the output video signal. The camera according to the preferred embodiment will now be described in more detail.

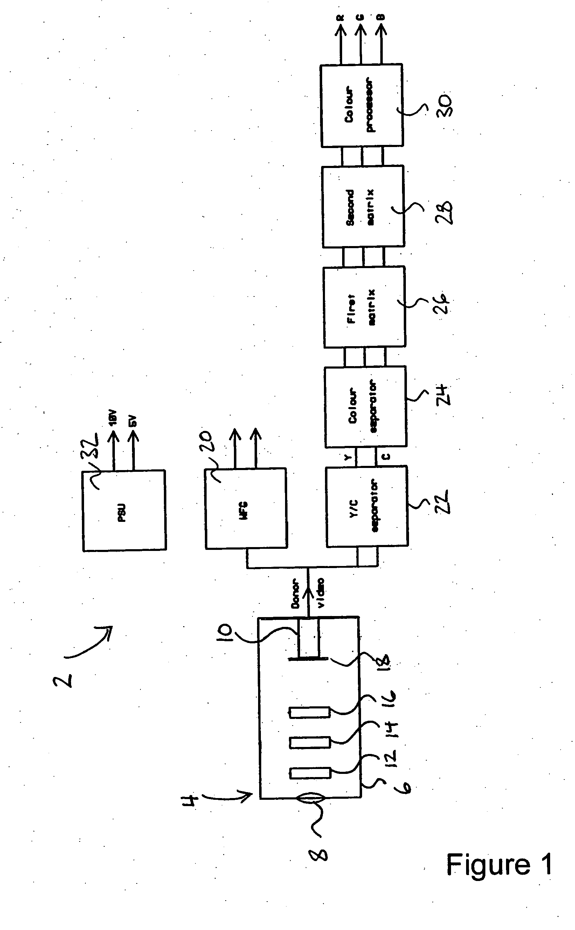

Figure 1, to which reference should now be made, illustrates a colour camera 2 according to the preferred embodiment of the invention. The preferred camera utilises the "L3Vision - CCD 65 Camera", also known as an Electron Multiplied CCD "EMCCD", with specific modifications to enable colour images to be captured at low light levels. The L3Vision camera is preferred as the pixel size of the CCD is large (20 by 30gm) in comparison to the pixel size of other commercially available cameras. A relatively large pixel size is important when dealing with small light levels in which a signal may comprise of only a small number of incident photons. The larger pixel size means that more signal photons will fall on a given pixel, than for a pixel with a smaller size, therefore giving a better signal to noise ratio.

The modified L3Vision camera 4 comprises a housing 6, with a lens 8 and a charge coupled device (CCD) solid state light sensor 10. Between the sensor 10 and the lens is a Near Infra-Red Cut Filter (NIRC) 12, a Lenticule Filter 14, and an Optical Filter 16. NIRC Filter 12 removes the infra-red part of the incident electromagnetic radiation received from the source, as at low light levels this radiation is comparable in magnitude to the visible or photopic wavelengths (400-650nm) and therefore obscures the colour part of the signal. The lenticule filter 14 is used to slightly defocus the image to remove scene edges. The Optical filter 16 is used to correct the gain of particular colours of light incident on the sensor. In the preferred embodiment, a pale cyan filter is used to reduce the amount of red light that is captured. As indicated above, at low light levels, radiation in the red and infra-red tend to dominate the spectrum. The pale cyan filter corrects for this and screens out some of the red signal so that the blue signal is not overwhelmed. As a result, the sensitivity of the sensor to red, green and blue signal components is partially equalised. The pale cyan filter preferred is the Kodak 80B colour correction filter.

In addition to the lens filters mentioned above, a mosaic filter 18 is positioned over the sensor 10, but spaced very slightly from it. The mosaic filter is disposed on the image plane of the sensor itself. The purpose of the mosaic filter is to produce useful colour information for the resulting output video signal as is known in the art. In particular the mosaic filter comprises regions which pass only a specific part of the electromagnetic spectrum, and regions which pass all of the electromagnetic spectrum, thereby modifying the incident radiation on the sensor. This process will however be described below in detail, so that the operation of the camera can be better understood.

It will be appreciated that light detectors in modern cameras are only strictly capable of detecting 'luminosity'. That is to say, incident photons are converted into electrons during the detection process, and although the conversion preserves information about the energy of the incident photon, information about the wavelength of the incident electron and therefore the colour part of the signal or the 'chrominance' is lost. To overcome this deficiency, colour cameras typically pass the incident light through a number of colour filters before the conversion takes place. Each filter removes one or more wavelengths from the incident light, so that the remaining signal corresponds to a particular colour and can be thought of as a colour component. By processing these different colour components, a colour image can be reconstructed from what is essentially a monochrome image at the sensor. This process for various filter designs is described in more detail in US Patent Application 2,733,291 in the name of Kell.

Previously, in digital cameras, the mosaics have been typically attached directly to the image plane, not spaced slightly from it as in the preferred embodiment. Furthermore, in typical digital colour cameras, the mosaic is comprised of individual colour filters which map onto individual pixels of the image sensor. Generating a colour representation of the scene is then simply a question of taking only the signal from the pixels of the appropriate colour.

The preferred embodiment of the invention however uses a mosaic filter comprising angled cyan, yellow and white stripes. Such a filter is known in the field of analogue video cameras and is described in more detail in US Patent 4,047,200 in the name of Koubek for example. However, it was believed to be unsuitable for with digital cameras, because the stripes could not be properly registered with the pixels of the sensor, such as (centroid shift) interlaced sensors.

General use of this kind of filter, and the operation of the processing circuitry to produce a colour signal, will next be described in more detail.

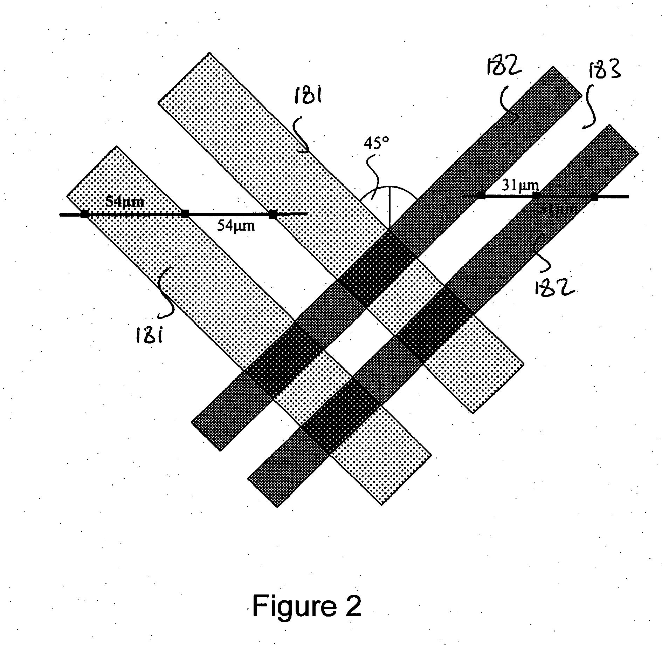

A known filter, for use with vacuum tube colour cameras, is shown in more detail in Figure 2. The filter comprises overlapping, spaced, yellow 181 and cyan 182 stripes typically angled to the horizontal at +45°, and -45° respectively. The yellow stripes have a lateral pitch of 54µm, and the cyan stripes have a lateral pitch of 31*µ*m. The areas between the stripes allow light of all frequencies to pass and are therefore referred to as 'white' areas 183.

It will be appreciated that yellow is a mix of red and green light, and therefore does not allow blue light to pass to the regions of the sensor underneath. The output from these yellow regions, if isolated therefore, contains information about the blue component of the incident light. Broadly speaking, purely yellow light would give a maximum signal at the output as no blue light would be filtered out, and the maximum intensity of the incident light would be available at the output.

Light of reduced intensity compared with the maximum would indicate that some blue light was incident and not therefore transmitted. Purely blue light for example would give no signal at the output as it would not pass through the yellow filter.

Similarly, cyan is comprised of blue and green light. It does not therefore transmit red light, and the output from the regions of the sensor underneath the cyan stripes, if isolated, contains information about the red component of the incident signal.

The output from the white regions of the sensor contains all frequencies and therefore gives a luminance signal. By suitable subtraction of the blue and red component signals from the luminance information, a green component signal can be obtained. The four necessary components of a video signal are therefore provided. For the known mosaic shown in Figure 2, with the stripe angle and dimensions given, the red signal component has a frequency of 3.5MHz and the blue signal component has a frequency of 2.0MHz.

Yellow, cyan, and magenta are known as subtractive primary colours of light. A mosaic comprising subtractive or complementary colours, such as yellow and cyan, is only one of a number of mosaic filters that are possible. However this kind of filter is preferred, as only 33% of the light incident on the mosaic filter is lost in producing the necessary colour information for the red, blue and green component signals. At low light levels it is important to retain as much of the signal as possible. Using a mosaic of red, green and blue filters for example would result in two thirds of the incident light being discarded to produce the component colour signals.

Efficient processing of the signals obtained from the regions of the sensor under the different filters is made possible by the angled orientation of the stripes, as is understood in the art. It will be appreciated that a typical video image is made up of a number of horizontal lines of video information. In the PAL format the picture comprises 625 lines of video information, and in the NTSC format the picture comprises 525 lines. In analogue tube cameras the lines are generated by the horizontal sweep of an electron beam.

The angle of the stripes means that each stripe impinges on a video line at a different horizontal location to that on the lines above and below. A vertical stripe for example would not. In particular, by angling the stripes at 45° the effect of the stripes is made anti-phase on adjacent lines. In fact, the effect of the stripes on adjacent lines of a camera sensor is to produce a sinusoidal pattern. Thus, by suitable addition or subtraction of adjacent lines of the picture signal, the effect of the filter stripes can be removed to result purely in a luminance signal, or re-enforced to give a purely chrominance signal. This naturally results in some interpolation of the intensity values on the lines, but means that the resolution of the resulting image is substantially unaffected. Furthermore, by processing the signal in this way, it is possible to omit the lenticule filter from the camera, resulting in improved image sharpness.

If a filter comprising only vertical lines was used for example, the effect of the filter could not be removed other than by deleting vertical stripes of the picture, and the horizontal resolution of the sensor would be halved as a result. In this case, it will be understood that the respective colour information produced by the stripes appears in the bandwidth of the video information in the form of harmonics of the line frequency (which contains luminance information), and hence there is no way of separating the chrominance and the luminance information without severe filtering.

By means of the angled mosaic filter 18 therefore, the video signal output from the CCD sensor 10 contains both luminance and chrominance information, and is produced with no loss in the resolution of the sensor. The dimensions of the stripes in the preferred mosaic filter 18 are different to those described above for the known mosaic filter for use with vacuum tube colour cameras. The reason for this and the advantage that it provides will be described in more detail later.

The processing circuitry of the L3Vision camera will now be described in detail. The right hand side of Figure 1, illustrates the processing operations employed in the preferred embodiment. It will be appreciated that these can be implemented in hardware as dedicated circuitry or as software. These operations are essentially similar to the processing steps employed in existing colour cameras. As a result, their operation will first described assuming a known camera. The modifications to the existing processes, employed in the preferred embodiment, will then be described.

A captured image signal is received from the CCD sensor 10. The waveform generator 20 generates the various control waveforms necessary for processing of the video information output signal. The captured image signal is passed to a Y/C (luminance/chrominance) separator 22, which is the first of a block of colour processing operations that include Colour separation operation 24, First Matrix operation 26, second matrix operation 28 and colour processor 30. Power supply unit 32 is also schematically shown.

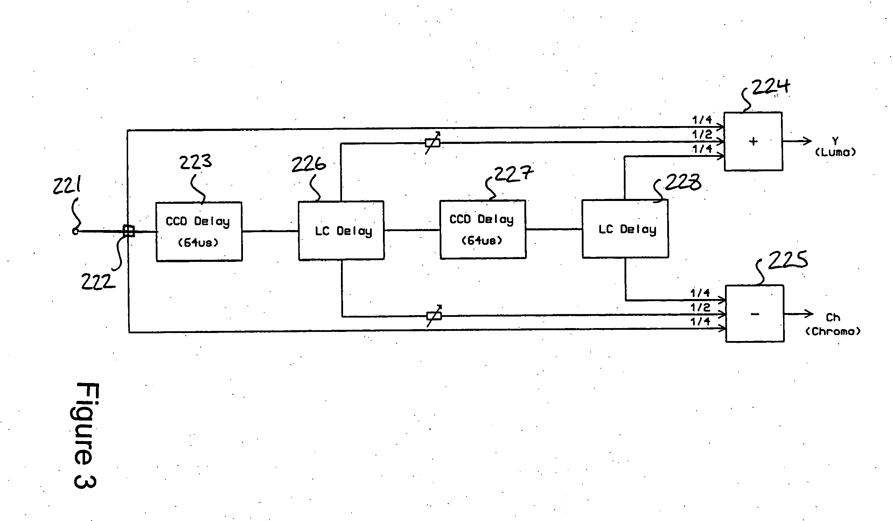

Y/C separator 22, shown schematically in Figure 3, firstly isolates the signal corresponding to the white areas of the sensor in order to produce a luminance signal. A video signal from the sensor 10 is received at input 221, and separates to three signal paths at junction 222. Junction 222 passes the signal to a first line delay block 223 (64µs), and to adder 224 and subtractor 225 at one-quarter strength each. The delayed signal from first line delay block 223 is passed to first fine-tuning delay block 226, where the signal can be delayed by a further ΔT *µs* if desired. The signal from first fine-tuning delay block 226 is passed to second line delay block 227 (64*µ*s), and is passed at half strength to adder 224 and subtractor 225 respectively. Subsequently, the delayed signal from the second line delay block 227 is passed to second fine-tuning delay block 228 where it can be delayed by a further ΔT *µ*s if desired. Finally, the signal from second fine-tuning delay block 228 is passed at one-quarter strength to adder 224 and subtractor 225 respectively.

Assuming that line information is constantly being received from sensor 10, it will be appreciated that adder 224 will add the signal from a line n at one-quarter strength, to the signal from the line n-1 at half strength, to the signal from line n-2 at one-quarter strength. As mentioned earlier, when the angle of the stripes is 45° to the horizontal the signal component resulting from the stripes is anti-phase on successive lines. Addition of the successive lines by adder 224 therefore results in an output which has no signal component corresponding to the mosaic stripes and is therefore purely a luminance signal. The relative strengths of the signals added are chosen to normalise the resulting output.

In certain cases, it is useful to orientate the stripes of the filter mosaic at angles other than 45° to the horizontal. In such cases, the delay of successive lines in the addition process can be tuned slightly by first and second fine-tuning filters 226 and 228 to ensure that on addition the components cancel.

Similarly, it will be appreciated that subtractor 224 will subtract the signal from a line n at one-quarter strength, and the signal from line n-2 at one-quarter strength from the signal from the line n-1 at half strength. In this case, the subtraction operation results in the anti-phase stripe components combining and the in-phase luminance signal being suppressed. The result at the output can therefore be thought of as the output from the sensor regions underneath the stripes of the mosaic filter. This output gives a chrominance signal.

The isolated luminance signal Y, and the chrominance signal C, are then passed to colour separator 24, where the red and blue components, and a pre-green component are isolated.

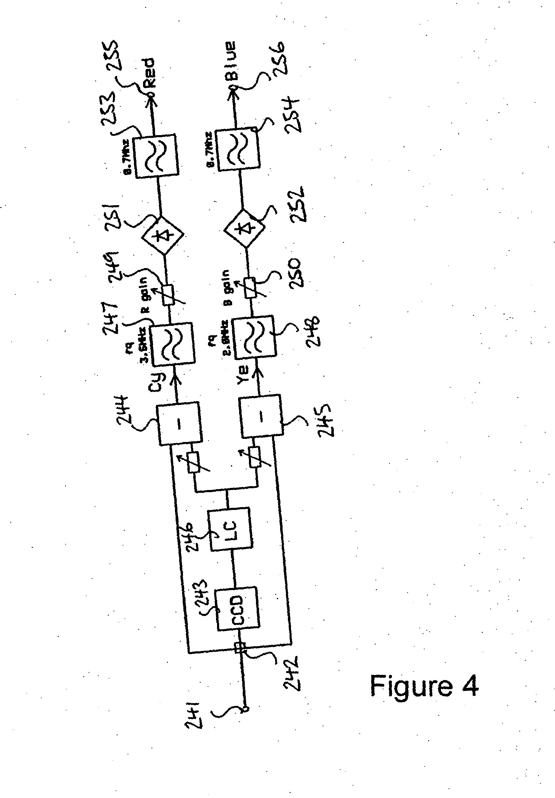

Figure 4 shows the components of the colour separator which are used to extract the red and blue colour signals. The chrominance signal is received from the Y/C separator 22 at input 241, and is passed to junction 242, which is the first stage of a cross-chroma filter as is known in the art. The junction passes the signal to delay block 243, and to subtractors 244 and 245. Delay block 243 delays the signal by 63.8µs before passing the signal to tunable delay block 246. The tunable delay block to used to finely tune the delay in the signal, and preferably introduces an additional delay of 0.2*µ*s so that the signal is delayed by exactly one line duration. The delayed signal is then passed to subtractors 244 and 245, which subtract the delayed line from the subsequent line received at the input.

In a similar way to that described above for the luminance separator, the in-phase components of the signal therefore cancel. The effect of this is to remove cross-chrominance errors from the chrominance signal, as well as any aliasing effects. The cross-chrominance errors appear in the chrominance signal as colour errors produced from the luminance scene edges.

Each subtractor 244, and 245, therefore outputs an improved chrominance signal from which the red and blue colour components can be extracted. In order to do this a highly selective tunable filter is used connected to the output of each subtractor. First filter 247, connected to subtractor 244, is tuned so that the blue component of the signal is removed. The output from this filter is therefore only the red component signal. Similarly, the second filter 248, connected to subtractor 245, is tuned so that the red component of the signal is removed. The output from this filter is therefore only the blue component signal.

The extraction of the red and blue components will now be described in more detail. It will be understood that the picture information has a fundamental frequency dictated by the line duration of 64 *µ*s. Similarly, the colour information signal components have a frequency that is a function of the number of times the stripes cross a given line of the picture. This is of course dependent on the lateral pitch or width, measured horizontally across the stripe, and the angle of the stripes. In conventional analogue systems, the angle of the stripes in the mosaic filter is ±45°. The lateral pitch of the yellow stripes is then chosen to be 54*µ*m with the inter-stripe spacing also being 54µm. This then gives a signal frequency for the blue component signal of 2MHz. Conversely, the cyan stripes are arranged to have a lateral pitch of 31*µ*m and an inter-stripe spacing of 31µm, resulting in a signal frequency of 3.5 MHz for the red signal component.

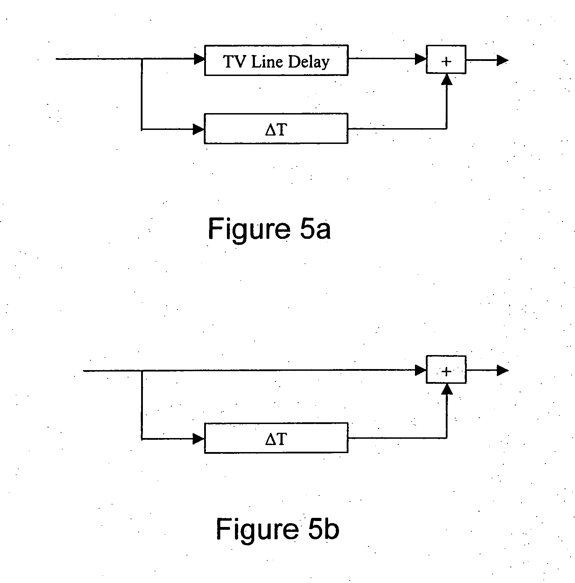

The tunable filters operate by delaying the input chrominance signal by exactly the right period of time such that when the delayed signal is added back to the signal from an adjacent line, the signal components in either one of the red or blue signals are exactly out of phase in each line and therefore cancel leaving only the other signal component present. The amount of delay required is expressed as essentially one line duration ± ΔT. This is shown schematically in Figure 5a.

The separate red and blue signals passed from the first tunable filter 247 and the second tunable filter respectively are then amplified, by means of respective gain elements 249, and 250, and converted to the baseband by demodulators 251 and 252. The carrier signal for the red and blue components is finally removed by respective low pass filters 253 and 254. Red and blue video signals are then provided to outputs 255 and 256 respectively.

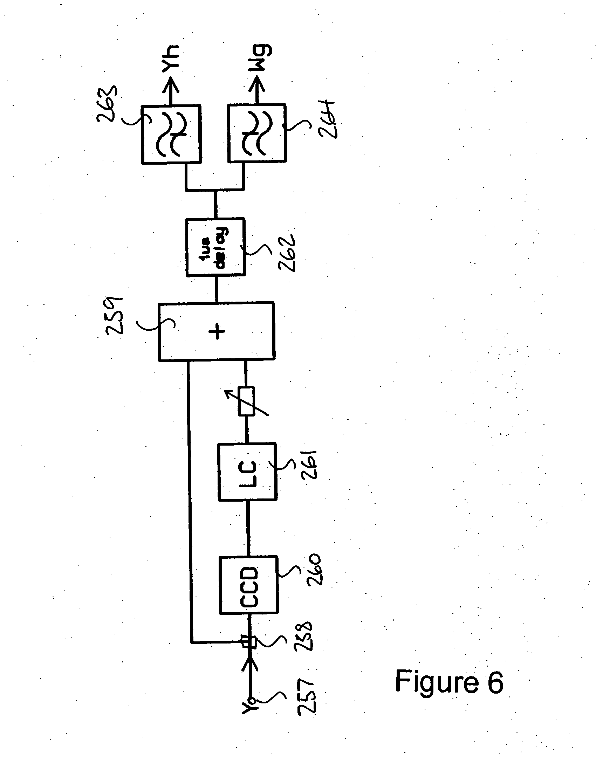

As is known in the art, the colour separator 24 block additionally comprises processing circuitry to extract the pure luminance information as well as green information from the luminance signal. The pure green information is produced by subtracting the red information and blue information from a pre-green signal obtained by low pass filtering the input signal. A circuit for doing this is shown in Figure 6.

Luminance information Y is received at input 257 and passed to junction 258 which splits the signal between an adder 259 and a delay stage comprising line duration delay block 260 (63.8µs) and tunable delay filter 261 (0.2µs). The delayed signal is then passed to the adder 259 where addition between the undelayed and delayed signal occurs. As described earlier with reference to the luminance/ chrominance separator, anti-phase components of the signal cancel. These components therefore form a cross-luma filter which removes residual cross-luma errors from the luminance path. Cross-luma errors are the result of the edges of the mosaic pattern not being perfectly filtered out in previous stages.

Subsequent to adder 259, the signal is passed to 1*µ*s delay block 262 and subsequently passed to both high pass filter 263 and low pass filter 264. The 1*µ*s delay block is used to synchronise or register the luminance signal with the signal being processed in the colour separation paths. As is known in the art, the output of the high pass filter provides the edge information, or 'luminance highs' Yh, and the output of the low pass filter provides a pre-green or 'pale green' signal Wg. This is a luminance signal with the high frequency edge information removed. In order to extract the required pure green information from the pre-green signal Wg it is necessary to remove the red and blue signal components. This can be performed by a simple subtraction operation, represented in Figure 1 by first matrix operation 26.

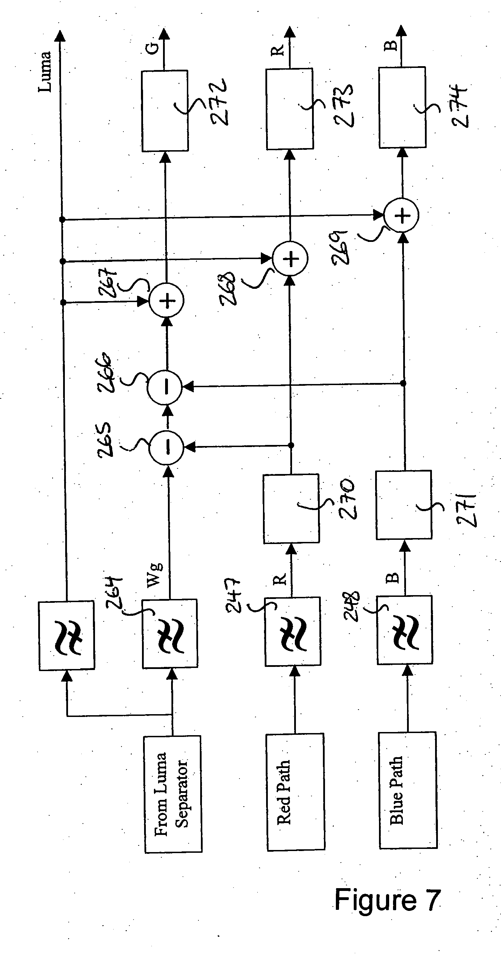

The subtraction performed by the first matrix operation 26 is illustrated schematically in Figure 7. Figure 7 shows the output from the chrominance separator and luminance separator shown in Figures 4 and 6. The resolution of each of the three paths is the same because of the low pass filtering performed on the pre-green luminance signal. The red and blue signals are subtracted from the pre-green signal by subtractors 265 and 266 respectively to give a pure green signal.

The necessity for the low pass filter is a result of the luminance signal containing high frequencies defining the edge components of the scene, and being produced with high resolution. The red and blue signal components however are obtained from approximately half of the sensor area, and therefore contain lower frequency information. The low pass filter therefore outputs a pre-green signal of the right order of magnitude to be combined in a subtraction operation with the red and blue components. The high frequency luminance information, defining the edge details of the scene, is then added to the red, green and blue channels to produce high resolution colour signals. This type of system is known as mixed high processing. The addition is performed by adders 267, 268 and 269 in the green, red and blue paths respectively.

Mixed high processing is preferred as low resolution colour channels advantageously exhibit less susceptibility to noise. At night-time illuminations, the colour component signals have poor signal to noise ratios and a high resolution colour channel would pick up more of the inherent noise.

Figure 7 also shows additional chrominance filters 270 and 271 located in the red and blue signal paths respectively, as well as comb filters 272, 273 and 274 located in each of the colour paths. These filters are part of the modifications provided by the preferred embodiment and are not found in conventional cameras. The operation of these filters and the reason for their inclusion will be described in detail below.

The output of the first matrix 26 is therefore green, red and blue signals. These are passed to the second 'matching' matrix 28 which adjusts the values according to the likely response of a screen on which they are to be displayed. Finally, the signals are passed to colour processor 30, which performs functions such as Gamma, Luma Scaling or Chroma Encoding, before being passed to output circuitry. These processes will not be explained here.

Although many of the above processing steps are common to prior art cameras, we have appreciated that a number of modifications are necessary in order to allow a camera to operate at low light levels such as Quarter Moonlight.

Firstly, the mosaic colour filter used with the camera was found to have a significant impact on the operation of the preferred embodiment. As described above, a subtractive primary colour mosaic filter is preferred because it gives a better signal-to-noise ratio, which is critical for low light level applications. Furthermore, a mosaic filter having angled stripes is preferred so that the horizontal and vertical resolution of the camera is not reduced, and so that the alias is reduced.

It should be appreciated that angled mosaics of this kind have not been considered for use with digital cameras because of the difficulty in registering the stripes of the filter with the pixels of the image sensor. If the registration is not exact then the colour component signals cannot be cleanly extracted from the captured video signal as they can be for analogue systems. For this reason, in many digital cameras, the mosaics used employ vertical stripes which allow registration to be performed easily but which lead to a reduction in horizontal resolution of about one half of the pixels. Other digital cameras may use chequerboard patterns.

The necessary registration between the pattern of the mosaic and the pixels of the CCD sensor has meant that the mosaics have typically been attached directly onto the image plane. However, when a mosaic like that shown in Figure 2 was attached to the image plane of the EMCCD (L3Vision) sensor a number of intermodulation errors resulting from the interaction of the red and blue signal components were found to occur. The intermodulation noise frequencies are given by the sum and the difference of the two component signals and so would occur at 5.5MHz (3.5 + 2.0) and at 1.5MHz (3.5 - 2.0). These components can be thought of as forming a 'magenta' carrier channel in the video information, and therefore needed to be removed to preserve the colour of the signal at low signal levels.

Until a mosaic filter was used with a CCD sensor of the type described, such interference products had not been seen in video cameras. It was deduced by experiment that the effect of these intermodulation products had only now become visible because of the quality of the imaging in the digital camera. Vacuum tube devices which had previously been used had a less than ideal modulation transfer function MTF and furthermore were not pixelated. The image of the mosaic filter could not therefore be resolved as clearly, which meant that some of the detail, as well as some of the noise were simply not picked up.

In order to reduce the effect of the intermodulation errors therefore, it was found most effective to elevate the mosaic filter from the surface of the image plane of the CCD sensor by the width of about 1/3 of a sensor pixel, or 5-10µm. This has the effect of slightly defocusing the image of the stripes on the sensor, therefore reducing the magnitude of the intermodulation products. Elevation of the mosaic filter away from the image plane to some extent therefore mimics the performance of the analogue cameras and removes the 'pattern' noise. It is therefore also preferred if the stripes of the mosaic filter have softened edge boundaries as this reduces higher order intermodulation products. It has been found particularly advantageous to achieve the spacing by placing plastic film between the CCD sensor surface and the mosaic filter. Conventional polyurethane film, such as cling-film has been found suitable.

In the applicant's earlier patent application GB2,318,012, a cyan-yellow angled stripe filter was applied to the surface of an image intensifier connected to the CCD of a digital camera. In that case, the intermodulation errors were not observed because of the defocusing effects of the image intensifier. Furthermore, although the registration with the pixels of the sensor was not ideal, where a stripe of the filter cut across a pixel, so that the signal output by the pixel corresponded to a two colour component signals, or to a colour component signal and the luminance signal, the output of that pixel was merely averaged. This caused some loss in resolution but otherwise allowed satisfactory operation to about l00mLux. However, this resulted in some of the signal being lost which is undesirable at the illuminations at which the preferred embodiment is designed to operate.

In the present case however, where maximising the signal to noise ratio is crucial, it was realised that some processing of the magenta noise would be required in order to remove any remaining noise signal from the captured video.

The defocusing of the image on the CCD sensor significantly reduces the magnitude of the intermodulation products. However, because in low light level applications preserving a good signal to noise ratio is essential, it is also preferred if additional, tunable filters, are provided in the colour separation circuits to filter out any of the magenta intermodulation components that remain. These filters are illustrated in Figure 7 as blocks 270 and 271. The filters preferably are comb filters such as those shown schematically in Figure 5b tuned to remove the magenta frequency components. Instead of magenta filters 270 and 271, a single magenta filter may be provided before the red and blue colour separation shown in Figure 4.

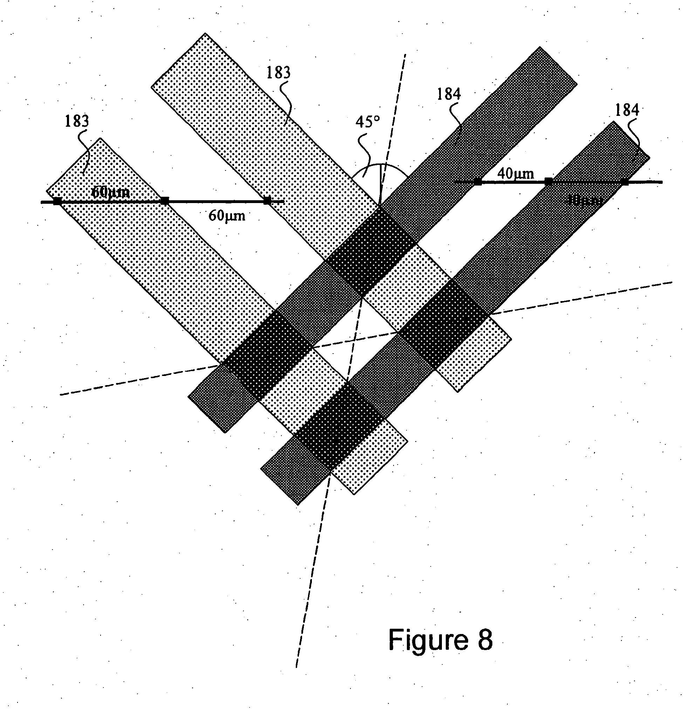

In order to adequately remove the magenta noise components and extract the useful red and blue signals, we have appreciated that the dimensions of the mosaic filter must be chosen so that both the red, blue and magenta components can be extracted using an integer pixel delay. If not, the signal components could not easily be separated and would contribute to a noisy signal. A preferred filter is shown in figure 8. The pitches of the stripes in this filter have been carefully chosen such that integer pixel delays are possible.

With a digital sensor therefore, the delays which are needed to separate the components are preferably realised in terms of an integer number of pixels. As a result it was necessary that ΔT as shown in Figure 5a be a fixed number of pixels so that the subtraction of the colour components, and noise signals can take place.

With a preferred angle of +45° for the stripes, cyan stripes with a pitch and inter-stripe spacing of 40*µ*m, and yellow stripes with a pitch and inter-stripe spacing of 60*µ*m gave a pixel cycle for the blue component signal of exactly 6 pixels, and a pixel cycle for the red component signal of exactly 4 pixels. That is to say that the signal component from the cyan stripes on a line of the picture signal occurs every 4 pixels, and lasts for a duration of 2 pixels, and the signal component from the yellow stripes on a line of the picture signal occurs every 6 pixels, and lasts for a duration of 3 pixels. For pixels having both a clear region, and a region lying under a stripe, the signal from the pixel was averaged. The corresponding frequencies for the signal components are then 2.8MHz for the red signal component and 1.9MHz for the blue signal component. The magenta noise signals were therefore found to occur at 0.9MHz and 4.7MHz.

It will be appreciated that the width of the filter stripes correspond to integer multiples of the pixel width (20*µ*m). In this case although twice and three times the pixel width have been used for the stripes, higher multiples could also be used. These are not as preferred however, as they result in frequencies for the signal components which are outside the preferred range.

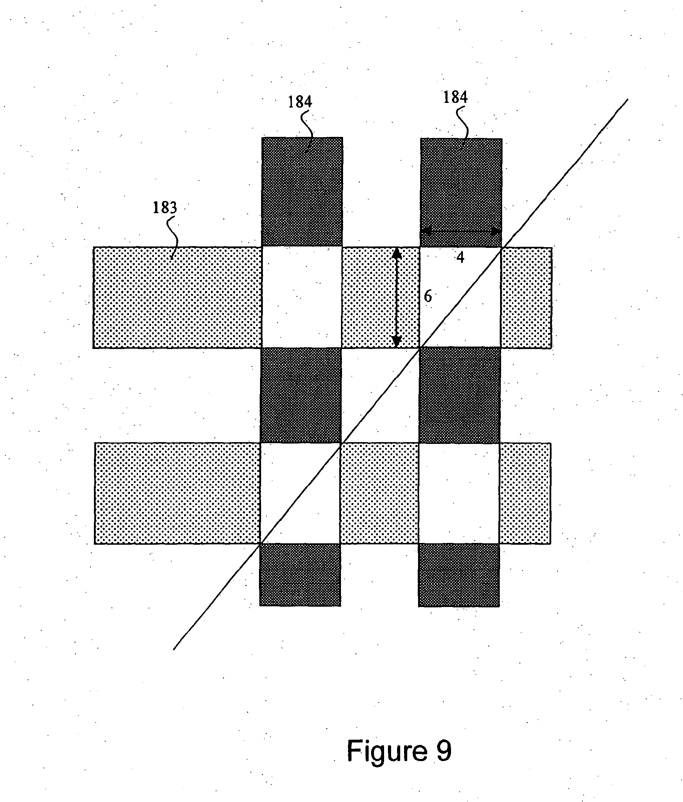

With stripes of the chosen pitch, the magenta interference components may be thought of as lying on the sensor plane at angles of 11° to the horizontal and 11° to the vertical. This can be understood by considering the 'green pattern' formed by the overlap between the cyan and yellow stripes. The green pattern is essentially a chequerboard of rectangles, as the stripes have different pitch, orientated at 45° to the horizontal. The chequerboard can be thought of as generating stripes on the image plane of the sensor directed along the diagonal of the chequerboard pattern. This is illustrated in Figure 8 by the broken lines, and illustrated in more detail in Figure 9. As can be seen from Figure 9, if the rectangular overlap of the green pattern is bisected along its diagonal into two right angled triangles, then the lengths of the opposite and adjacent sides will be given by the ratio of the pitch of the stripes, namely 4 to 6. This give angles for the right angled triangle of 34° and 56°. These angles are defined with respect to the edges of the stripe which are orientated at 45° in reality. Thus, on the image plane, one stripe is angled at 45° + 34° = 79°, and one stripe is angled at 45° - 34° = 11°.

As mentioned earlier, the stripes produce a sinusoidal pattern on the image sensor. The cyan stripes have a pixel cycle of 4 Luminance pixels on the sensor, which means that the sinusoid has a spatial period of 4 pixels, and a spatial frequency of 1/4 pixels. Similarly, the yellow stripes have a pixel cycle of 6 Luminance pixels on the sensor, which means that the sinusoid pattern has a spatial period of 6 pixels and a spatial frequency of 1/6 pixels.

By adding and subtracting the spatial frequencies for the yellow and cyan stripes, we can estimate that the green stripes of the pattern, corresponding to the magenta noise, have frequencies of 5/12 and 1/12 pixels respectively. Turning these frequencies back into periods measured in terms of pixels, we find that the green stripes appear with periods of 12/5 pixels and 12 pixels respectively. Thus, in the case of the 12 pixel period, one pixel of the sensor represents +30° of the sinusoid period. Conversely, in the 12/5 period case, one pixel of represents 150° of the sinusoid period, which in the case of a sine wave is equivalent to -30°.

Thus, each of the desired red and green signal components and the two green noise components have sinusoids in which 1 luminance pixel is an integer multiple of 30°. For the comb filters to cancel or isolate particular signals from successive lines of the picture signal, a phase difference of 180° must be introduced. As 30° is a whole divisor of 180°, all of the signal components can be successfully isolated.

Thus, in the diagrams, the Luma rejector 225 introduces a delay of 64*µ*s to cancel the effects of the stripes on alternate lines.

The Cyan Cancellers in Figure 4, 243, 246 and 245 have a ΔT of 4 pixels, and therefore cancels signals that have phase reversal between lines and a period of 4 pixels, namely the Cyan sinusoid.

Similarly, the Yellow Cancellers in Figure 4, 243, 246 and 244 have a ΔT of 3 pixels, and therefore cancel signals that have phase reversal between lines and a period of 3 pixels, namely the Yellow sinusoid.

The magenta noise is cancelled by filters 270 and 271 shown in Figure 7, with ΔT set to 6 pixels. As shown in Figure 5b, the magenta filter does not delay the signal by a line delay, but only by a delay of 6 pixels. The delay of 6 pixels cancels both of the magenta components identified above, as 6 pixels amount to a difference of 180° in both cases. For this reason a single magenta filter may be alternatively, or additionally provided in front of the red or blue colour separation stages shown in Figure 4.

The decoding and isolation is therefore made possible by the particular choice of dimensions and angles of the stripes. It will be appreciated however that the decoding depends on the relative phase of the sinusoids produced by the stripes as a result of their pitch and angle, and the stripes themselves need not be positioned to coincide with the luminance pixels.

Clearly, multiples of the above arrangement are possible. For example, if the angle for the stripes was made 22.5°, then the pixel processing could be carried out at twice the pixel processing rate.

An alternative mosaic filter that has been found to work well by the applicants has yellow and cyan stripes both with a pitch of 3 Luma pixels arranged at angles of ±30° to the vertical. With the L3Vision camera described, this gives a frequency of 3.6MHz for the Yellow and Cyan components. As a result, of the stripes having equal pitch, only one Magenta component of interference is generated having a frequency of 7.2MHz equal to the sum of the frequencies for Cyan and Magenta. The lower frequency component cancels. The angles of the green stripes giving the Magenta interference component are 0° and 90°, which unlike the 45° mosaic are in phase with the Luminance signal. A similar analysis as outlined above for the 45° filter shows that the Magenta component has a cycle of 1.5 pixels. This gives a spatial phase of 240° per pixel, which is twice the spatial phase per pixel for the yellow and cyan components. Thus, providing double pixel sampling is possible, the magenta interference can be removed without loss of luma resolution.

Referring again to Figure 7, the preferred embodiment can be seen to comprise comb filters 272, 273 and 274 located respectively in the Green, Red and Blue paths respectively. These comb filters are additional cross chroma luma filters used to remove luma errors reaching the colour path. The cross luma errors may appear in the final video output as yellow or magenta edges appearing in the image at locations with sharp edge definition.

The comb filters 272, 273 and 274 are 'tuned' to remove any residual image of the sharp edges of the picture from the colour path, to minimize the noise processing errors for standard colour coding processing such as PAL or NTSC. Preferably, therefore these filters take a five line average of the signal. Again by vertically averaging consecutive lines of the picture image, this component of noise can be eliminated. At the low light levels at which the preferred camera is designed to operate, the presence of these additional cross chroma filters is required to remove noise which in combination with other noise signals could otherwise partially mask the already diminished signal.

In addition, to the modifications to the mosaic and to the filtering circuits described above, the preferred embodiment comprises an auto-black matching circuit. At low light levels all forms of noise must be confronted and adequately dealt with. For example, if cameras are operating with a high level of noise, it is important that the levels of noise in each of the Red, Green and Blue colour paths are equalised. If the noise levels differ then a 'noise colour cast' will exist. In the present embodiment, the noise in the red and blue channels increases disproportionately to that in the green channel. As the relative noise level increases, such as when the signal level drops, it appears like a 'black level' into which the green signal information is gradually squashed. Thus, the picture produced by the camera will take on a magenta noise colour cast. Conventional colour cameras operating at every-day illumination levels do not suffer from this problem, as they lack sensitivity.

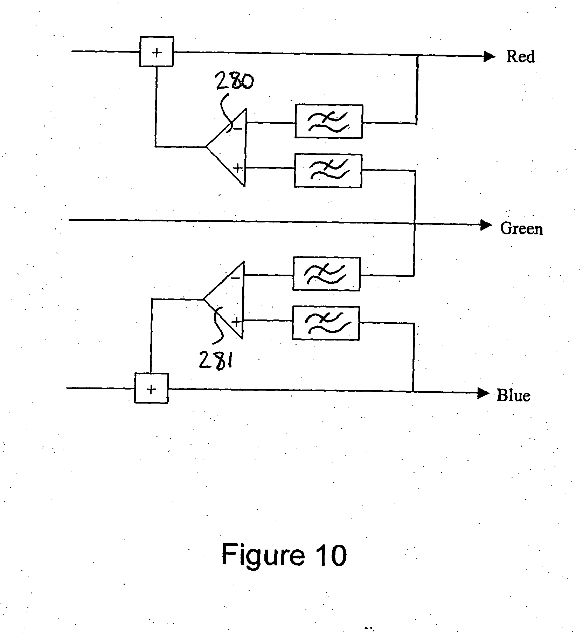

A preferred circuit for auto-black matching is shown in Figure 10 to which reference should be made.

The auto-black matching circuit consists of two operational amplifiers 280 and 281 which provide feedback in each of the red and blue colour paths. An input from the green colour path to the operational amplifier is combined with an input from one of the red and blue paths respectively. All of the inputs are subject to low pass filtering so that the DC level of the input signal is passed and the higher frequencies are removed.

The consequence of the auto-black matching circuit is that all three of the colour channels have a similar DC level, ensuring that the "colour cast" of the channels is grey. The circuit also helps combat thermal drift. It will be appreciated that the circuit described above is a DC offset equivalent to the 'grey world (gain) algorithm' for colour balancing.

This circuit is not necessary for daylight conditions or good signal conditions and may therefore be bypassed. At poor illuminations it is however required.

At low light levels, the various limitations of the CCD sensors used become apparent, whereas they may not be noticed at more usual illuminations. In particular, the L3Vision camera used in the preferred embodiment was found to have a quantum efficiency of approximately 5% in the blue part of the spectrum. That is to say that for every 100 photons of blue light, on average only 5 were captured and detected by the sensor. This figure is poor in comparison with the quantum efficiencies for other areas of the spectrum, such as red and green. As a result, it was found desirable to suppress the response of the sensor using the Kodak 80B colour filter. This reduces the sensitivity of the sensor most strongly in the low red region of the spectrum, but has a gradually decreasing suppression into the greens and blues. As a result, the signals that are obtained are captured with a roughly even sensitivity across the spectrum. The NIRC filter performs a similar role in cutting out the Infra-red part of the spectrum which would otherwise dominate the signal.

A preferred embodiment of a low light level colour camera has therefore been described in which the following techniques are adopted:
a) A large pixel format sensor (20µm by 30µm) is used, to improve the signal to noise ratio of the resulting signal;
b) A complementary colour mosaic filter is used, so that the transmission of the incident light is 66%;
c) An angled mosaic filter is used, as this enables full resolution from the Frame Transfer L3Vision Camera, without interlace artefacts;
d) An NIRC filter is used to reduce the effect of the IR part of the spectrum, and a Colour Balance Filter Kodak 80B filter is used to equalise signal (and noise) levels into each of the R, G and B paths; and
e) A high blue sensitivity CCD sensor is used, eg, Open Electrode, Back Illuminated, Lumagen, Indium Tin Oxide layers, instead of Poly Silicon for example.
f) The use of low resolution colour channels (0.5MHz/50 > TVL/H), and mixed high processing.

The following specific modifications are also made to improve the functioning of the camera and address the newly identified noise issues:
a) Placement of the colour mosaic is above the CCD image plane by about 1/3 of the pixel spacing;
b) Extra spatial electronic filters 272, 273 and 274 are used to reduce error interference and noise. The specific vertical averaging filters reduce 'specific scene contents' from producing spurious colour and noise.
c) Extra intermodulation filters 270 and 271 are used to remove the magenta noise component;
d) The use of a specific mosaic filter geometry such that pixel selection decoding techniques can be used;
e) The use of specially tuned filters, so as not to reduce the vertical and horizontal resolution.
f) The use of an Auto Black matching servo for the R, G and B channels.

Although the preferred embodiment uses the L3Vision camera, it will be appreciated that the techniques described herein are not limited to this camera only. The SPD-Impactron camera, manufactured by Texas Instruments, was also found to be acceptable, although as it has a smaller pixel size (7*µ*m x 7*µ*m) than the L3Vision camera, the resulting output is concomitantly dark.

In addition, where resolution is not a critical requirement of the camera, it will be appreciated that orthogonal colour mosaics may be used with the Frame Transfer CCD. These work well with channels of poorer resolution, but lead to a luminance channel of similar resolution. As a result, only the black matching algorithm and the extra special filters will be required to produce low light level pictures.

Although, orthogonal filters are arranged to correspond as closely as possible to the underlaying pixel, spacing of the filter from the image plane will still provide an improvement in the noise of the resulting signal as it will reduce fixed pattern errors.

While, the combination of features described above advantageously allow the preferred embodiment to capture useful colour video signal at very low light levels, many of the features are directed to reducing the effect of a particular source of noise. The features described may therefore have individual application to any colour camera in which it is desired to reduce noise.

## Claims

1. A colour camera comprising:
a solid state sensor for imaging a scene and outputting a signal, the solid state sensor having an image plane at which radiation from the scene is incident;
a mosaic filter disposed on the image plane of the solid state sensor, the mosaic filter having a mosaic pattern arranged to modify the radiation received from the scene such that colour information signals representative of the scene can be derived; and
processing means for processing the output of the solid state sensor, to produce colour information signals for use in a colour video signal; and
wherein the mosaic filter is spaced from the image plane of the solid state sensor such that the colour information signals can be derived from the mosaic pattern, but such that intermodulation errors between the colour information signals arising from the mosaic pattern are reduced.

2. A camera according to claim 1, wherein the mosaic pattern comprises stripes angled to the lines of the solid state sensor.

3. A camera according to claim 2, wherein the stripes are formed of two sets, one set comprising stripes passing a first spectral range of radiation, alternating with stripes passing all spectral regions of radiation, and the second set comprising stripes passing a second spectral range of radiation, alternating with stripes passing all spectral regions of radiation.

4. A camera according to claim 3, wherein the stripes passing the first and second spectral ranges are subtractive primary colours, and the stripes passing all spectral regions are clear.

5. A camera according to claim 3, wherein the stripes passing the first spectral range are yellow, and the stripes passing the second spectral range are cyan.

6. A camera according to any of claims 2 to 5, wherein one set of stripes is angled at +45° and the other set of stripes is angled at -45° to the lines of the image plane.

7. A camera according to claim 6, wherein the lateral pitch of the stripes is a multiple of the pixel width of the solid state sensor.

8. A camera according to claim 6 or 7, wherein the pitch of the one set of stripes is twice the pixel width of the solid state sensor, and the pitch of the other set of stripes is three times the pixel width.

9. A camera according to any preceding claim, wherein the processing means comprises:
separate colour information signal paths, each path corresponding to a different spectral region; and
filter means arranged in one or more of the separate paths to remove the colour intermodulation errors arising from the mosaic pattern.

10. A camera according to claim 9, comprising filter means arranged in one or more of the separate paths to remove cross chroma errors arising from the mosaic pattern.

11. A camera according to any preceding claim, wherein the processing means comprises:
separate colour information signal paths, each path corresponding to a different spectral region; and
equalization means arranged to equalize the noise level and black level in each of the separate paths such that at low signal to noise levels a video signal can be derived with substantially no colour cast.

12. A camera according to any preceding claim, wherein the edges of the mosaic pattern on the mosaic filter are softened such that they are not sharp edges.

13. A camera according to any preceding claim, wherein the solid state sensor is the EMCCD 'L3Vision' CCD sensor.

14. A camera according to any preceding claim, wherein the mosaic filter is spaced from the image plane of the solid state sensor by 1/3 the width of a pixel of the sensor.

15. A camera according to any preceding claim wherein the spaced arrangement of the mosaic filter is such that the image of the mosaic pattern is defocused in comparison to an image from an un-spaced mosaic filter placed directly on the sensor.

16. A camera according to any preceding claim, wherein the mosaic filter is spaced from the image plane of the sensor by a material having a refractive index that is substantially unity.

17. A camera according to any preceding claim, wherein the mosaic filter and the image plane of the solid state sensor are only slightly spaced from each other such that the colour information signals can be derived from the mosaic pattern and the intermodulation errors between the colour information signals arising from the mosaic pattern are reduced.
